# EUROPÄISCHE PATENTSCHRIFT

(11) **EP 4 011 481 B1**
(45) Veröffentlichungstag und Bekanntmachung des Hinweises auf die Patenterteilung: **28.06.2023**
(21) Anmeldenummer: 21211398.9
(22) Anmeldetag: 30.11.2021
(51) Int. Cl.: B01D 46/44, B01D 46/48

(54) **ENTSTAUBUNGSVORRICHTUNG MIT EINER STEUERUNG FÜR WENIGSTENS ZWEI BETRIEBSMODI UND VERFAHREN ZUR STEUERUNG EINER ENTSTAUBUNGSVORRICHTUNG**
DUST COLLECTION DEVICE WITH A CONTROL FOR AT LEAST TWO OPERATING MODES AND METHOD FOR CONTROLLING A DUST COLLECTION DEVICE
DISPOSITIF DE DÉPOUSSIÉRAGE DOTÉ D'UNE COMMANDE POUR AU MOINS DEUX MODES DE FONCTIONNEMENT ET PROCÉDÉ DE COMMANDE D'UN DISPOSITIF DE DÉPOUSSIÉRAGE

(30) Priorität: 11.12.2020 DE 102020133149
(43) Veröffentlichungstag der Anmeldung: 15.06.2022
(73) Patentinhaber: Höcker Polytechnik GmbH, 49176 Hilter a.T.W. (DE)
(72) Erfinder: Höcker, Frank Hermann, 49076 Osnabrück (DE)
(74) Vertreter: Dr. Träger & Strautmann PAe PartG mbB

(56) Entgegenhaltungen:
- EP-A1- 3 539 639
- DE-A1- 4 138 168
- DE-B3-102015 104 364
- DE-U1-202016 100 873

## Beschreibung

Die Erfindung betrifft eine Entstaubungsvorrichtung zum Abscheiden von Verunreinigungen aus einem Luftstrom, wie Späne und Stäube, umfassend:
- wenigstens eine Lufteinlassöffnung und wenigstens eine Luftauslassöffnung,
- einen Expansionsraum mit einer darin untergebrachten Filtereinheit,
- wenigstens einen Motor zum Antrieb wenigstens eines Ventilators zur Erzeugung eines Luftvolumenstroms welcher von der wenigstens einen Lufteinlassöffnung zu der wenigstens einen Luftauslassöffnung geführt wird,
- wenigstens einen von der Entstaubungsvorrichtung entfernbaren Auffangbehälter zum Auffangen von Stäuben und/oder Spänen.

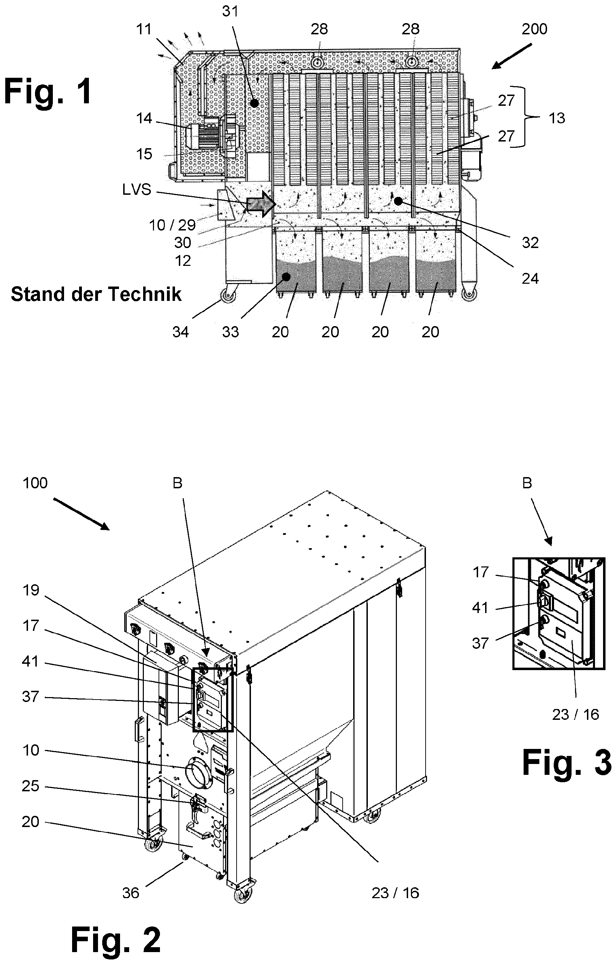

Entstaubungsvorrichtungen, auch bezeichnet als "Entstauber" oder "Absaug- und Filteranlagen", sind dazu vorgesehen, Verunreinigungen aus einem Luftstrom abzuscheiden. Sie werden beispielsweise in der holzverarbeitenden Industrie eingesetzt um die Luft von den bei der Holzverarbeitung entstehenden Spänen und Stäuben zu reinigen. Die hinsichtlich der Arbeitssicherheit für Entstaubungsvorrichtungen relevanten Parameter sind der Norm DIN EN 12779-2016 und DIN EN 16770 - 2018 zu entnehmen. Die Norm DIN EN 16770 zeigt eine gattungsgemäße Entstaubungsvorrichtung, die in Figur 1 dargestellt ist.

Bei der als Stand der Technik bekannten Entstaubungsvorrichtung gemäß Figur 1 handelt es sich um eine auf Rädern gelagerte mobile Anlage. Mittels eines Ventilators wird mit Staub und Spänen verunreinigte Rohluft in den Entstauber eingesaugt, mittels einer Filtereinheit gereinigt und als Reinluft ausgeblasen. Die aus der Rohluft abgeschiedenen Staub- und Spänepartikel werden in unterhalb des Reinigungsbereiches befindlichen Auffangbehälter gesammelt.

Erreicht der Auffangbehälter-Füllstand an Staub und Spänen die Grenze des nutzbaren Volumens muss der Auffangbehälter entleert oder ausgetauscht werden. Hierzu wird in aller Regel der Arbeitsmodus beendet und der Entstauber abgeschaltet. Meist wird zuvor noch eine Abreinigung betätigt, um mittels Vibrationen, Druckluft, Spülluft oder einer Rütteleinrichtung eine möglichst große Menge von im Rohluftbereich befindlichen Staub- und Spänepartikeln in die Auffangbehälter zu befördern. Weiterhin kann vorgesehen sein, oberhalb der Auffangbehälter ein Absperrblech in den Rohluftbereich einzuschieben um zu verhindern, dass bei oder nach Entfernen eines Auffangbehälters auf den Fußboden rieselt und den Aufstellraum verschmutzt beziehungsweise kontaminiert.

Nachteilig hierbei ist, dass trotz Abreinigung und Absperrblech das Herausrieseln von Staubund Spänepartikeln während des Behälterwechsels nur unzureichend verhindert werden kann. Das Austreten von Staub aus dem Entstauber kann nicht gänzlich ausgeschlossen werden, da sich auch nach Abschalten des Entstaubers Staub und Späne im Schwebezustand befinden oder sich auf Kanten im Inneren ablagern und schon bei leichten Erschütterungen, die beispielsweise beim Entnehmen des Auffangbehälters entstehen, auf den Boden rieseln.

Nachdem der Auffangbehälter, oder der darin enthaltene Foliensack, gewechselt worden ist, kann er im geleerten Zustand wieder an die dafür vorgesehene Stelle unterhalb des Expansionsraumes platziert und dort verriegelt werden. Anschließend muss noch der Schieber entfernt werden. Danach kann der Entstauber wieder eingeschaltet werden und seine Arbeit fortsetzer Weiter Entstaubungsvorrichtungen sind aus DE 20 2016 100873 U1, DE 10 2015 104364 B3, EP 3 539 639 A1 und DE 41 38 168 A1 bekannt.

Aufgabe der Erfindung ist es, die genannten Nachteile zu beseitigen und einen Entstauber vorzuschlagen, bei dem die Auffangbehälter einfach gewechselt und weiterhin die Kontamination des Bodens mit Staub während des Behälterwechsels reduziert oder im Idealfall vollständig vermieden wird. Aufgabe der Erfindung ist es auch, ein entsprechendes Arbeitsverfahren vorzuschlagen.

Diese Aufgabe wird gelöst durch eine Entstaubungsvorrichtung mit den Merkmalen des Anspruchs 1 und ein Verfahren mit den Merkmalen des Anspruchs 10.

Erfindungsgemäß umfasst die Entstaubungsvorrichtung eine Einstelleinrichtung, mittels derer ein in einem Arbeitsmodus wirkender Luftvolumenstrom auf einen in einem Wartungsmodus wirkenden geringeren Luftvolumenstrom reduzierbar ist.

Definitionen:
Der Arbeitsmodus bezeichnet einen Betriebszustand der Entstaubungsvorrichtung, in dem diese ihre bestimmungsmäßige Arbeit verrichtet und die mit Staub und Spänen verunreinigte Luft reinigt.

Der Wartungsmodus bezeichnet einen Betriebszustand der Entstaubungsvorrichtung, in dem der Austausch beziehungsweise die Entleerung gefüllter Auffangbehälter erfolgt.

Als Rohluft wird die mit Spänen und/oder Staub verunreinigte Luft bezeichnet, die der Entstaubungsvorrichtung durch einen Lufteinlass zugeführt wird.

Als Reinluft wird die von Spänen und/oder Staub gereinigte Luft nach Passieren einer in der Entstaubungsvorrichtung installierten Filtereinheit bezeichnet.

Erfindungswesentlich ist, dass das Wechseln eines Auffangbehälters nicht nur dann möglich ist, wenn die Entstaubungsvorrichtung vollständig abgeschaltet und/oder der in der Entstaubungsvorrichtung strömende Luftstrom auf Null reduziert worden ist, sondern auch dann, wenn er auf einen vordefinierten Wert reduziert worden ist. Dabei ist der im Wartungsmodus strömende Luftstrom so vorgewählt, dass der anliegende Unterdruck ausreichend klein ist, um einen Auffangbehälter trotz bestehenden Unterdrucks aus der Entstaubungsvorrichtung entfernen zu können. Andererseits ist der im Wartungsmodus strömende Luftstrom so groß, dass etwaige im Schwebezustand befindlichen Staubpartikel sowie Stäube und Späne, die sich bei der Demontage des Auffangbehälters von Ecken und Kanten, auf denen sie sich zwischenzeitlich abgelagert haben, nicht auf den Boden unterhalb der Entstaubungsvorrichtung fallen. Diese Partikel werden vielmehr durch den reduzierten Luftstrom in der Schwebe gehalten oder an die der Rohluft zugewandten Seite der Filtereinheit gezogen.

Die optimale Größe des im Wartungsmodus strömenden Luftstroms ist dabei von verschiedenen Parametern, insbesondere dem Einsatzzweck der Anlage, dem Gewicht der Staub- und Spänepartikel sowie der strömungstechnischen Konzeption der Entstaubungsanlage abhängig.

Die gewünschte Reduktion des Volumenstroms kann auf verschiedene Arten realisiert werden. Bei Entstaubungsvorrichtungen mit mehreren Motoren ist es beispielsweise möglich, einzelne Motoren abzuschalten und so die Saugleistung zu reduzieren. Alternativ dazu ist auch eine Reduktion der Motor-Drehzahl und damit einhergehend eine Reduktion der den Luftvolumenstrom erzeugenden Ventilatoren möglich. Grundsätzlich ebenfalls möglich ist eine Verstellung des Anstellwinkels der Ventilator-Flügel oder variabler Schaufelgeometrie des Ventilators insgesamt. Wesentlich ist somit, dass mittels einer zu diesem Zweck vorgesehenen Einstellvorrichtung ein für die Abscheidearbeit im Arbeitsmodus erforderlicher Luftvolumenstrom auf einen signifikant kleineren Wert reduzierbar ist.

Vorzugsweise ist der im Wartungsmodus wirkende Luftvolumenstrom um 30% bis 99% kleiner, vorzugsweise um 69% bis 89% kleiner, als der im Arbeitsmodus wirkende Luftvolumenstrom. Ein auf einen Wert innerhalb der genannten Bereiche reduzierte Luftstrom im Wartungsmodus ist für eine Vielzahl von Anwendungen einsetzbar, ohne das individuelle Anpassungsmaßnahmen an individuelle Einsatzbedingungen erforderlich sind.

Vorzugsweise wird die Einstelleinrichtung durch einen Schalter ausgebildet, mittels dessen die Entstaubungseinrichtung aus einer den Arbeitsmodus ausbildenden ersten Schaltstellung in eine den Wartungsmodus ausbildende zweite Schaltstellung umschaltbar ist und umgekehrt. Durch einen Schalter, beispielsweise einen Kippschalter mit einer Ja/Nein Funktion, kann die Umschaltung sehr leicht und bedienerfreundlich realisiert werden. Zudem ist es möglich, den Schalter mit einer entsprechenden Beschriftung oder einem Piktogramm zu versehen, um das Risiko von Bedienungsfehlern zu reduzieren.

Besonders günstig ist es, wenn die Entstaubungsvorrichtung weiterhin ein zentrales Bedienpult umfasst und der Schalter am Bedienpult angeordnet ist. Hierdurch wird die Bedienung weiter vereinfacht. Beispielsweise kann der Schalter in Nachbarschaft zu einem Not-Aus-Schalter angebracht sein.

Alternativ oder ergänzend zu einem am Bedienpult vorgesehenen Schalter, kann ein Schalter auch am Auffangbehälter angeordnet sein. Hierdurch wird es möglich, den Luftvolumenstrom auf zweierlei Art zu reduzieren. Ein an einem Auffangbehälter vorgesehenen Schalter kann so ausgelegt sein, dass eine Bedienperson den Schalter dadurch betätigt, dass sie den Auffangbehälter aus seiner Position an der Entstaubungsvorrichtung heraus bewegt. Vereinfacht gesagt reduziert sich somit der Luftvolumenstrom beispielsweise augenblicklich dann, wenn die Bedienperson die Verriegelung einen beispielsweise als Rollbox konzipierten Auffangbehälter löst und den Auffangbehälter aus der Entstaubungsvorrichtung herauszieht.

Der Demontage des Auffangbehälters kann ein Verzögerungs-Stellglied vorgesehen sein, welches nach Umschalten des im Arbeitsmodus wirkender Luftvolumenstrom auf den im Wartungsmodus wirkenden geringeren Luftvolumenstrom für eine vordefinierte Zeitspanne die Demontage des Auffangbehälters von der Entstaubungsvorrichtung blockiert, so dass die Demontage erst dann möglich ist, wenn der Luftvolumenstrom seinen im Wartungsmodus vorgesehenen Sollwert erreicht hat. Das Verzögerungs-Stellglied kann beispielsweise so ausgelegt sein, dass beispielsweise eine am Auffangbehälter vorgesehene Verrieglung für eine vordefinierte Zeitspanne blockiert wird. Alternativ zu einer Zeitsteuerung kann die Blockade auch an eine Bedingung geknüpft sein, die erfüllt sein muss, um die Verrieglung öffnen zu können. Beispielsweise kann vorgesehen sein, dass sich die Verrieglung nur dann öffnen lässt, wenn die Drehzahl des Ventilators und damit der im Entstauber wirkende Luftvolumenstrom auf einen vordefinierten Wert abgefallen ist.

Das Verzögerungsstellglied kompensiert somit etwaige Nachlauf-Zeitspannen, während derer die physische Umschaltung zwar bereits stattgefunden hat, der tatsächlich in der Anlage strömende Luftvolumenstrom aber noch nicht vollständig auf den für den Wartungsmodus vorgesehenen Luftvolumenstrom abgefallen ist. Hierdurch kann gewährleitstet werden, dass die Demontage eines Auffangbehälters erst dann erfolgt, wenn die Größe des im Wartungsmodus strömenden Luftvolumenstrom auch tatsächlich erreicht ist.

In einer bevorzugten Ausführungsform umfasst die Entstaubungsvorrichtung weiterhin eine Einrichtung zur Regulation des Luftvolumenstroms, vorzugsweise einen Frequenzumrichter, mittels dessen die Größe des Luftvolumenstroms regulierbar ist.

Ein Frequenzumrichter ist ein Stromrichter, der aus Wechselspannung eine in der Frequenz und Amplitude veränderbare Wechselspannung für die direkte Versorgung von elektrischen Maschinen wie Drehstrommotoren generiert. Sollwerte für Frequenz und Amplitude der Ausgangswechselspannung richten sich nach den Erfordernissen der elektrischen Maschine und deren aktueller Last. Der Frequenzumrichter kann zusätzliche Sensoreingänge aufweisen, um Zustandsparameter der elektrischen Maschine wie Drehzahl oder die momentane Position oder Geometrie der Ventilator-Flügel oder Luftvolumenströme oder Drücke zu erfassen.

Insbesondere dann, wenn die Entstaubungseinrichtung durch einen oder mehrere Elektromotoren angetrieben wird, kann durch einen Frequenzumrichter die Drehzahl des Ventilators so verändert werden, dass der im Arbeitsmodus wirkende Luftvolumenstrom auf den im Wartungsmodus wirkenden Luftvolumenstrom eingestellt wird und umgekehrt. Alternativ zu einer Drehzahlveränderung mittels eines Frequenzumrichters käme auch in Betracht, geeignete Mittel einzusetzen um die Stellung der Rotorblätter zu verändern und so den Luftvolumenstrom zu variieren.

Weiterhin käme auch in Betracht, die Entstaubungsvorrichtung nicht mit Wechselstrom, sondern mit Gleichstrom zu betreiben. In diesem Falle wäre käme in Betracht an Stelle des im Wechselstrombetrieb eingesetzten Frequenzumrichters einen Gleichstromregler einzusetzen.

In einer weiteren Ausführungsform ist der im Arbeitsmodus wirkende Luftvolumenstrom und/oder der im Wartungsmodus wirkende Luftvolumenstrom einstellbar. Hierdurch werden individuelle Anpassungen an spezifische Betriebsbedingungen möglich. Arbeitet die Entstaubungsvorrichtung beispielsweise in einem Bereich, in dem die zu reinigende Luft nur sehr leichte Stäube und Späne enthält, kann der im Wartungsmodus wirkende Luftvolumenstrom entsprechend klein vorgewählt werden. Hierdurch wird einerseits noch die erforderliche Ansaugleistung realisiert um das Absinken von Partikeln auf den Untergrund zu verhindern, andererseits wird wenig Antriebsenergie benötigt und die Anlage arbeitet sehr leise.

In einer bevorzugten Ausführungsform kann die Entstaubungsvorrichtung mit einer Automatiksteuerung ausgerüstet werden, indem
- ein Sensor zur Ermittlung eines Auffangbehälter-Füllstandes und/oder ein Sensor zur Ermittlung einer Auffangbehälter-Position vorgesehen ist,
- vom Sensor bei Erreichen eines vordefinierten Auffangbehälter-Füllstandes oder einer vordefinierten Auffangbehälter-Position ein Steuersignal an eine Maschinensteuerung übermittelbar ist,
- mittels der Maschinensteuerung und/oder der Einstelleinrichtung des im Arbeitsmodus wirkender Luftvolumenstrom auf den im Wartungsmodus wirkenden geringeren Luftvolumenstrom reduzierbar ist.

Durch die genannte Automatik wird vermieden, dass ein Auffangbehälter über einen vordefinierten Füllstand hinaus befüllt werden kann. Außerdem erübrigt sich eine manuelle Überwachung des Füllstandes, die beispielsweise auf Basis von in den Auffangbehältern enthaltenen Sichtfenstern erfolgen kann.

Weiterhin kann vorgesehen sein, dass
- der Auffangbehälter in einer Aufnahmebehälter-Aufnahme der Entstaubungseinrichtung gelagert und durch eine Verriegelung fixierbar ist,
- und ein Sensor zur Ermittlung des Verriegelungszustandes der Verriegelung vorgesehen ist und ein vom Sensor ermittelter Verriegelungszustands-Kennwert an die Maschinensteuerung und/oder die Einstelleinrichtung übermittelbar ist,
so dass eine Erhöhung des im Wartungsmodus wirkenden geringeren Luftvolumenstrom auf den im Arbeitsmodus wirkender Luftvolumenstrom in Abhängigkeit vom Verriegelungszustand der Verriegelung steuerbar ist.

Eine solche Steuerung stellt die ordnungsgemäße Anbringung der Aufnahmebehälter in den Aufnahmebehälter-Aufnahmen sicher und verhindert das Hochfahren des Luftvolumenstroms auf den für den Arbeitsmodus vordefinierten Wert bei nicht bestimmungsgemäß verriegelten Aufnahmebehältern.

In einer weiteren Ausführungsform kann vorgesehen sein, dass die Entstaubungsvorrichtung eine Umschalteinrichtung umfasst, mittels derer:
- ein manueller Betrieb der Entstaubungsvorrichtung vorwählbar ist, in dem die Umschaltung von Arbeitsmodus und Wartungsmodus manuell schaltbar ist,
- ein automatischer Betrieb der Entstaubungsvorrichtung vorwählbar ist, in dem die Umschaltung von Arbeitsmodus und Wartungsmodus durch die Maschinensteuerung bei Vorliegen vordefinierter Kriterien automatisch erfolgt.

Im manuellen Modus kann das Auswechseln der Aufnahmebehälter also im Prinzip jederzeit erfolgen, beispielsweise auch bei einem halb gefüllten Auffangbehälter. Die Bedienperson betätigt hierzu lediglich den für das Umschalten vorgesehenen Schalter von "Arbeitsmodus" auf "Wartungsmodus" und kann sodann den Behälter wechseln. Hierdurch kann das Auswechseln eines oder mehrere Auffangbehälter beispielsweis auch zeitabhängig durchgeführt werden. Beispielsweise könnte vorgesehen sein, dass eine Bedienperson zum Schichtende alle Auffangbehälter einer Entstaubungsanlage unabhängig von ihrem Füllzustand entleert, so dass bei Beginn der nächsten Arbeitsschicht eine gereinigte Anlage zur Verfügung steht.

Wird dagegen der automatische Betrieb vorgewählt, kann das Wechseln der Auffangbehälter an vordefinierte Bedingungen geknüpft werden, insbesondere an den Füllstand der Aufnahmebehälter. Hierdurch wird eine Bedienperson von Arbeiten zur Füllstandskontrolle entlastet. Zudem wird sichergestellt, dass ein Auffangbehälter nicht über ein vordefiniertes nutzbares Volumen hinaus befüllt wird. Durch eine solche Überfüllung, die bei manuellem Betrieb der Anlage ohne Füllstandsüberwachung nicht ausgeschlossen ist, können Störungen und Fehlfunktionen resultieren.

Die erfindungsgemäße Aufgabe wird auch durch ein Verfahren zum Betrieb einer Entstaubungsvorrichtung gelöst, bei dem
- im Arbeitsmodus ein Luftvolumenstrom erzeugt wird, mittels dessen innerhalb der Entstaubungsvorrichtung Verunreinigungen, wie Späne und Stäube, aus dem Luftstrom abgeschieden werden und
- im Wartungsmodus ein Luftvolumenstrom erzeugt wird, der ausreichend klein ist um eine widerstandsarme Demontage des Auffangbehälters zu ermöglichen und andererseits ausreichend groß ist, um das Herabrieseln von Spänen und Stäuben aus dem Expansionsraum in den durch Demontage des Auffangbehälters ausgebildeten Freiraum zu vermeiden oder zu reduzieren.

Im Gegensatz zu bei als Stand der Technik bekannten Verfahren zur Reinigung beziehungsweise zum Auswechseln von Auffangbehältern wird die Entstaubungsvorrichtung für die Wartungsarbeit somit nicht komplett ausgeschaltet. Es wird vielmehr ein reduzierter Luftvolumenstrom in der Anlage aufrechterhalten. Der reduzierte Luftvolumenstrom reicht aus um das Herabrieseln von Staubpartikeln aus der Anlage während der Wartungsarbeiten zu verhindern. Gleichzeitig ist der Luftstrom so gering, dass die mit Unterdruck beaufschlagten Behälter leicht auswechselbar sind und aus dem geringen Unterduck keine Gefahren resultieren.

In einer bevorzugten Ausgestaltung des Verfahrens zum Betrieb einer Entstaubungsvorrichtung erfolgt die Umschaltung zwischen Arbeitsmodus und Wartungsmodus von der Maschinensteuerung oder der Einstelleinrichtung automatisch dann, wenn ein von einem Sensor ermittelter Istwert einen vordefinierten Sollwert erreicht oder überschreitet. Die Automatiksteuerung erleichtert das Handling und entlastetet das Bedienpersonal von Arbeiten zur Überwachung des Auffangbehälter-Füllstandes.

Weitere, die Erfindung verbessernde Maßnahmen, werden nachstehend mit der Beschreibung von bevorzugten Ausführungsbeispielen der Erfindung anhand der Figuren näher dargestellt.

Die Figuren zeigen:
- Fig. 1: zeigt eine als Stand der Technik bekannte Entstaubungsvorrichtung in einer schematischen Schnittdarstellung;
- Fig. 2: zeigt eine perspektivische Ansicht einer erfindungsgemäßen Entstaubungsvorrichtung;
- Fig. 3: zeigt ein Detail B aus Fig. 2;
- Fig. 4: zeigt die Entstaubungsvorrichtung gemäß Fig. 2 in einer Seitenansicht;
- Fig. 5: zeigt die Entstaubungsvorrichtung gemäß Fig. 2 in einer Ansicht von vorne;
- Fig. 6: zeigt die Entstaubungsvorrichtung gemäß Fig. 2 in einer Ansicht von oben;
- Fig. 7: zeigt einen Auffangbehälter in einer Seitenansicht;
- Fig. 8: zeigt einen Auffangbehälter in einer Vorderansicht;
- Fig. 9: zeigt einen Auffangbehälter in einer Ansicht von oben;
- Fig. 10: zeigt einen Auffangbehälter in einer perspektivischen Ansicht;
- Fig. 11: zeigt die Entstaubungsvorrichtung gemäß einer in Fig. 6 enthaltenen Schnittansicht im Arbeitsmodus AM;
- Fig. 12: zeigt die Entstaubungsvorrichtung gemäß einer in Fig. 6 enthaltenen Schnittansicht im Arbeitsmodus WM;
- Fig. 13: zeigt ein Detail C aus Fig. 11;
- Fig. 14: zeigt ein Detail E aus Fig. 11;
- Fig. 15: zeigt ein Detail D aus Fig. 12.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet oder zu weiteren, hier nicht näher beschriebenen Kombinationen zusammengeführt werden können. Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung, soweit dies technisch sinnvoll ist, beliebig miteinander kombiniert sein können. Die in den Figuren dargestellten Ausführungsbeispiele haben somit nur beschreibenden Charakter und sind nicht dazu gedacht, die Erfindung in irgendeiner Form einzuschränken.

Die im Weiteren verwendeten Begriffe: "obere", "oben", "untere", "linke" oder "rechte" beziehen sich auf die in der Zeichnung dargestellte Anordnung der Komponenten der Entstaubungsvorrichtung, die dem üblichen Betriebsmodus der Vorrichtung in aufrechtstehender Lage entspricht.

Figur 1 zeigt eine als Stand der Technik bekannte mobile Entstaubungsvorrichtung 200, die auf Rädern 34 gelagert und somit zu unterschiedlichen Einsatzorten bewegbar ist. Während des Arbeitseinsatzes ist die mobile Anlage ortsfest an ihrem jeweiligen Einsatzort fixiert und über einen Anschlussstutzen 29 mit einem nicht dargestellten Absaug-Rohrleitungssystem oder einem flexiblen Absaugschlauchsystem verbunden. Ein in der Entstaubungsvorrichtung 200 vorgesehener Ventilator 15 wird von einem Motor 14 angetrieben und erzeugt den erforderlichen Volumenstrom, um die an den Holzbearbeitungsmaschinen entstehenden Späne und Stäube 33 an geeigneten Absaugstellen in das Absaugrohrleitungssystem zu saugen und durch eine am Anschlussstutzen 29 angeordnete Lufteinlassöffnung 10 in einen im Inneren der Entstaubungsvorrichtung 200 angeordneten Expansionsraum 12 zu leiten.

Im Inneren der Entstaubungsvorrichtung 200 ist weiterhin eine Filtereinheit 13 mit Filterelementen 27 vorgesehen. An der Oberfläche der Filterelemente 27 erfolgt die Abscheidung der Späne und Stäube aus der Rohluft 32. Staub und Späne werden dann in Auffangbehältern 20 aufgefangen.

Die Oberfläche der Filterelemente 27 bildet somit die Grenze zwischen dem Rohluftbereich und dem Reinluftbereich.

Der Rohluftbereich wird gebildet durch das Innere der Absauganlage einschließlich der Filtereinheit 13, der Staub-Auffangbehälter 20 und dem von der Lufteinlassöffnung 10 bis zur Oberfläche der Filterelemente 27 reichenden Expansionsraum 12.

Als Reinluftbereich wird der Bereich im Inneren der Entstaubungsvorrichtung 200 bezeichnet, der von der Oberfläche der Filtereinheit 13, in der die Abscheidung stattfindet, bis zu einem für den Luftaustritt vorgesehenen Luftauslass 11 reicht.

Im Inneren der Entstaubungsvorrichtung 200 befindet sich die zu reinigende Rohluft 32 zunächst im Expansionsraum 12. Unterhalb des Expansionsraumes 12 sind bei dem als Stand der Technik dargestellten Beispiel vier Auffangbehälter 20 in entsprechenden Auffangbehälter-Aufnahmen 24 angeordnet.

Oberhalb des Expansionsraums 12 befindet sich die Filtereinheit 13. In der Filtereinheit 13 werden die Verunreinigungen aus dem Luftstrom abgeschieden und fallen in die Auffangbehälter 20 beziehungsweise in dort angebrachte Säcke. Das maximale Volumen des Auffangbehälter-Innenraumes, das für die Aufnahme von Staub und Spänen 33 nutzbar ist, ohne dass es zur Überfüllung oder zu Fehlfunktionen der Entstaubungsvorrichtung 200 kommt, wird als nutzbares Volumen des Auffangbehälters 20 bezeichnet.

Ist das nutzbare Volumen eines Auffangbehälters 20 gefüllt, wird die Entstaubungsvorrichtung 200 insgesamt, oder zumindest der Ventilator 15, abgestellt. Der durch die Anlage strömende Luftvolumenstrom kommt hierdurch zum Erliegen. Die zu diesem Zeitpunkt im Expansionsraum 12 enthaltene Rohluft 32 verbleibt an Ort und Stelle. Gegebenenfalls kann noch eine Filterabreinigungsvorrichtung 28 betätigt werden, um mittels Vibrationen, Druckluft, Spülluft oder einer Rüttelvorrichtung eine möglichst große Menge von im Rohluftbereich befindlichen Staub- und Spänepartikeln in die Auffangbehälter zu befördern. Weiterhin kann ein Absperrblech vorgesehen sein, dass vor dem Wechseln der Auffangbehälter 20 in die Anlage einzuschieben ist um zu verhindern, dass bei oder nach Entfernen eines Auffangbehälters 20 Staub auf den Fußboden rieselt.

Figur 2 zeigt eine erfindungsgemäße Entstaubungsvorrichtung 100, die analog zu er als Stand der Technik bekannten Entstaubungsvorrichtung 200 (vgl. Fig. 1) im Wesentlichen die gleichen Komponenten und Baugruppen umfasst. Allerdings weist das Ausführungsbeispiel gemäß Figur 2 lediglich einen Auffangbehälter 20 auf. Der Auffangbehälter 20 ist mit einer Verriegelung 25 an der Entstaubungsvorrichtung 100 fixiert. Selbstverständlich kann auch die erfindungsgemäße Entstaubungsvorrichtung 200 mit mehreren Auffangbehältern 20 ausgerüstet sein.

Figur 3 zeigt in einer der Figur 2 entnommenen Detailvergrößerung die Anordnung von drei Schaltern 17, 41 und 37 im Bereich der Maschinensteuerung 23.

Der Schalter 17 ermöglicht die Umschaltung eines Luftvolumenstromes aus einem Arbeitsmodus AM in einen Wartungsmodus WM. Im Arbeitsmodus AM wird durch einen Ventilator 15 ein zum Ansaugen von Staub und Spänen erforderliche Luftvolumenstrom LVM-AM erzeugt. Im Wartungsmodus WM erzeugt der Ventilator 15 einen signifikant geringeren Luftvolumenstrom LVS-WM. Der Schalter 17 ermöglicht somit die Reduktion von einem großen Luftvolumenstrom LVS-AM auf einen kleinen Luftvolumenstrom LVS-WM und umgekehrt.

Im dargestellten Ausführungsbeispiel erfolgt die Reduktion des Luftvolumenstroms LVS über ein Absenken der Drehzahl des Ventilators 15. Hierzu ist ein Frequenzumrichter 19 vorgesehen, mittels dessen die der Entstaubungsvorrichtung über einen Stromanschluss (nicht dargestellt) zugeführte Wechselspannung in der Frequenz und/oder Amplitude verändert wird. Im Ergebnis steuert der Frequenzumrichter 19 vereinfacht gesagt die Stromzufuhr zu dem für den Ventilatorantrieb vorgesehenen Elektromotor 14. Hierdurch wird die Drehzahl des Ventilators 15 und damit der in der Entstaubungsvorrichtung strömende Luftvolumenstrom LVM reguliert.

Alternativ hierzu sind auch andere Verfahren einsetzbar um den Luftvolumenstrom LVM zu verändern. Beispielsweise könnte vorgesehen sein, dass die Stellung und/oder die Geometrie der Ventilatorlaufrad-Flügel verändert wird oder dass über zusätzliche Be- bzw. Entlüftungsschlitze oder über Drosselorgane Teile des in der Entstaubungsvorrichtung wirkenden Luftstroms abgelenkt und/oder gedrosselt werden. In letzterem Fall arbeitet somit nicht die Drehzahl des Ventilators reduziert, sondern die Luftströmung verändert. Wesentlich für die Erfindung ist somit, dass die Größe des Luftvolumenstrom LVS verändert wird. Die Art und Weise, wie diese Veränderung bewirkt wird, ist von sekundärer Bedeutung.

Bei dem Schalter 41 handelt es sich um einen Notaus-Schalter. Im dargestellten Ausführungsbeispiel ist der Notaus-Schalter 41, der in aller Regel sehr markant in roter Farbe ausgeführt ist, somit zentral zwischen den Schaltern 17 und 37 angeordnet.

Mittels des Schalters 37 kann die Entstaubungsvorrichtung 100 zudem von einem manuellen Betrieb in einen Automatikbetrieb umgestellt werden. Im manuellen Betrieb erfolgt die Umschaltung von Arbeitsmodus AM auf Wartungsmodus WM manuell durch eine Bedienperson indem diese den Schalter 17 betätigt. Im Automatikbetrieb erfolgt die Umschaltung automatisch dann, wenn ein Sensor auf Basis eines vordefinierten Kriteriums ein entsprechendes Steuersignal an eine an der Entstaubungsvorrichtung 100 vorgesehene Maschinesteuerung 23, beziehungsweise an eine Einstelleinrichtung 16, übermittelt. Im dargestellten Ausführungsbeispiel weist der Aufnahmebehälter 20 einen Sensor 21 zur Überwachung des Füllstandes auf. Ist das nutzbare Volumen des Auffangbehälters mit Spänen und/oder Staub gefüllt, übermittelt der Sensor das Steuersignal und der Luftvolumenstrom LVM-AM wird auf den Luftvolumenstrom LVM-WM reduziert. Bei dem Sensor handelt es sich im dargestellten Ausführungsbeispiel um einen Ultraschallsensor. Alternativ zu einem Ultraschallsensor sind jedoch auch andere Sensoren einsetzbar, beispielsweise optische (Lichtschranken)-Sensoren oder Gewichtssensoren.

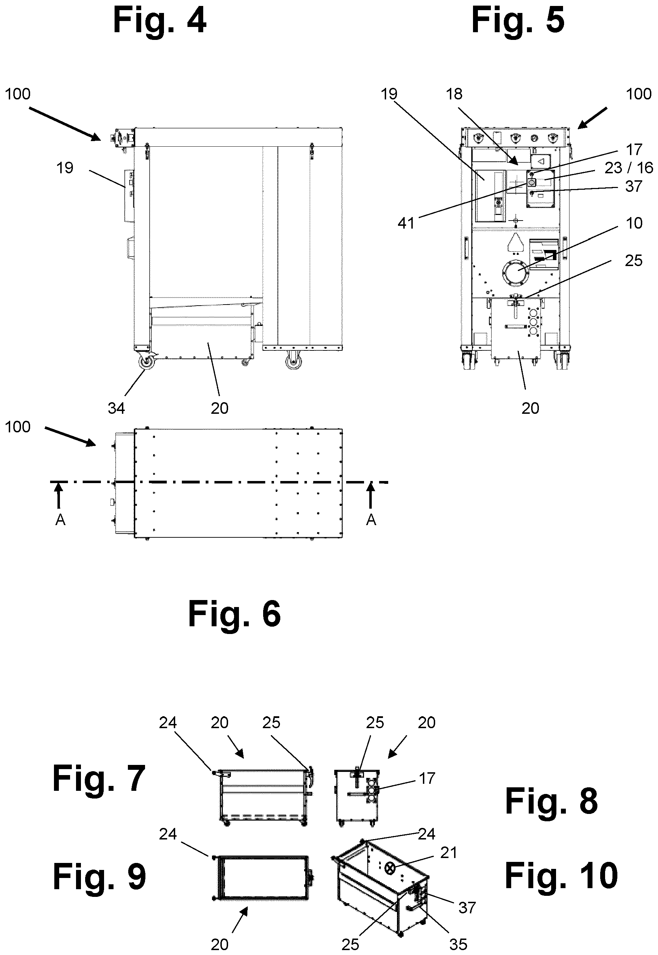

Die Figuren 4 bis 6 zeigen die in Figur 2 perspektivisch dargestellte Entstaubungsvorrichtung in drei Ansichten. In der Vorderansicht (Fig. 5) ist zu sehen, dass die wesentlichen Bedienelement, insbesondere die Schalter 17 und 37 sowie ein Notausschalter 41, auf einem zentralen Bedienpult 18 angeordnet sind.

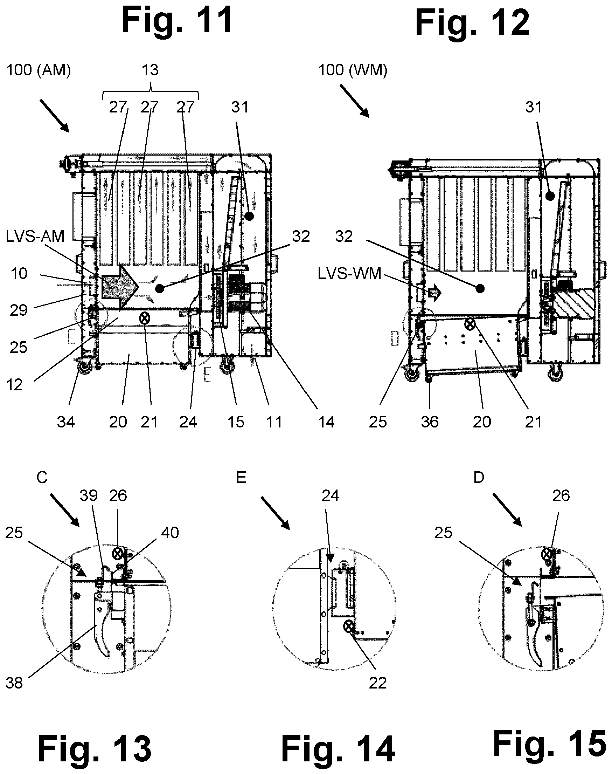

Die Figuren 7 bis 10 zeigen einen aus der Entstaubungsvorrichtung 100 demontierten Auffangbehälter 20. Der Auffangbehälter 20 umfasst eine Verriegelung 25, deren Verriegelungszustand im dargestellten Ausführungsbeispiel von einem Sensor 26 überwacht wird. Wie in der Detailansicht von Fig. 12 gut zu erkennen ist, umfasst die Verriegelung 25 einen Verriegelungsriff 38 und einen Verriegelungshaken 39. Mittels des Verriegelungsgriffes 38 kann der Haken 39 hinter einen am Rahmen der Entstaubungsvorrichtung 100 vorgesehenen Vorsprung 40 eingehakt und verspannt werden.

Im dargestellten Ausführungsbeispiel ist am Aufnahmebehälter 20 zudem ein Schalter 37 angebracht, mit dem, analog zum Schalter 17, der Anlagenbetrieb vom Arbeitsmodus AM in den Wartungsmodus WM umstellbar ist. Ob eine Entstaubungsvorrichtung 100 einen Schalter 17 und zusätzlich einen Schalter 37 umfasst oder ob nur einer dieser beiden Schalter vorgesehen ist, ist in Abhängigkeit von den an die Entstaubungsvorrichtung gestellten Anforderungen variierbar. Grundsätzlich ist es auch möglich, die Anlage insgesamt ohne einen Schalter 17 oder 37 zu betreiben. In einem solchen Fall erfolgt die Umsteuerung von Wartungsmodus WM auf Arbeitsmodus AM und umgekehrt unmittelbar über die Einstelleinrichtung 16 oder die Maschinensteuerung 23.

Figur 10 zeigt zudem einen Füllstandssensor 21, der im dargestellten Ausführungsbeispiel an der Innenwand des Auffangbehälters 20 angebracht ist. Alternativ wäre auch eine Anbringung des Sensors am Rahmen der Entstaubungsvorrichtung 100 oberhalb des Auffangbehälters 20 möglich. In diesem Fall würde der Füllstandssensor 21 vereinfacht gesagt von oben in den Auffangbehälter 20 hineinsehen und den Füllstand überwachen.

Die Figuren 11 und 12 zeigen die Entstaubungsvorrichtung 100 in einer Schnittdarstellung zum einen im Arbeitsmodus (Fig. 11) und zum anderen im Wartungsmodus (Fig. 12). In Figur 11 ist der im Luftvolumenstrom LVN-AM in Form eines großen Pfeiles angedeutet. Dahingegen ist in Figur 12 der im Wartungsmodus strömende Luftvolumenstrom LVM-WM als - im Vergleich zum Pfeil in Fig. 11 - signifikant kleiner dargestellt. Hiermit soll angedeutet werden, dass die Anlage im Arbeitsmodus von einem großen Luftvolumenstrom und im Wartungsmodus von einem kleinen Luftvolumenstrom durchströmt wird. Die Größe der Pfeile hat jedoch nur eine prinzipielle und keine maßstäbliche Bedeutung.

Der im Arbeitsmodus AM fließende Luftstrom LVS-AM und die Wirkungsweise der Anlage entspricht im Wesentlichen den im Zusammenhang mit Figur 1 (Stand der Technik) gemachten Erläuterungen. Im Wartungsmodus WM strömt jedoch - im Gegensatz zu der in Figur 1 gezeigten Entstaubungsvorrichtung 200 - weiterhin ein reduzierter Luftstrom LVS-WM durch die Lufteinlassöffnung 10 in die Anlage. Dieser reduziert Luftvolumenstrom LVM-WM hält die im Schwebzustand befindlichen Partikel im Rohluftbereich beziehungsweise saugt sie - wenn auch mit relativ geringer Saugwirkung gegen die Oberfläche der Filterelemente 27. Ebenso werden auf Ecken und Kanten liegende Partikel, die sich beim Ausbau des Aufnahmebehälters 20 lösen, angesaugt und im Schwebezustand gehalten und fallen nicht auf den Boden.

Fig. 12 zeigt die Situation im Wartungsmodus WM unmittelbar vor Austausch des Aufnahmebehälters 20. Die Verriegelung 25 ist bereits gelöst und der im Arbeitsmodus in der Aufnahmebehälter-Aufnahme 24 leicht angehoben über dem Boden hängende Aufnahmebehälter 20 ist an seiner Vorderseite bereits auf den Boden abgesenkt. Im nächsten Schritt kann der Aufnahmebehälter 20 somit vollständig aus der Aufnahmebehälter-Aufnahme entfernt und auf seinen Rädern 36 weggerollt werden. Dabei ändert sich die Position des Aufnahmebehälters 20 gegenüber der an Ort und Stelle verbleibenden Entstaubungsvorrichtung 100. Diese Positionsänderung wird im dargestellten Ausführungsbeispiel mit einem Sensor 22, hier einem Näherungssensor, überwacht.

Auch die Positionsänderung des Aufnahmebehälters beziehungsweise das vom Sensor 22 gelieferte Signal, ist zur Anlagensteuerung verwendbar und kann in der Maschinensteuerung beispielsweise genutzt werden, um die Umschaltung vom Wartungsmodus WM in den Arbeitsmodus AM zu beeinflussen. Im dargestellten Ausführungsbeispiel ist die Steuerung so programmiert, dass ein solches Umschalten von Wartungsmodus WM in den Arbeitsmodus AM nur dann erfolgen kann, wenn der Aufnahmebehälter 20 in seiner eingehängten Position befindet.

### Bezugszeichenliste

- 10: Lufteinlassöffnung
- 11: Luftauslassöffnung
- 12: Expansionsraum
- 13: Filtereinheit
- 14: Motor
- 15: Ventilator
- 16: Einstelleinrichtung
- 17: Schalter
- 18: Bedienpult
- 19: Frequenzumrichter
- 20: Auffangbehälter
- 21: Sensor (Füllstand von 20)
- 22: Sensor (Position von 20)
- 23: Maschinensteuerung
- 24: Aufnahmebehälter-Aufnahme
- 25: Verriegelung
- 26: Sensor (für 25)
- 27: Filterelement
- 28: Filterabreinigungsvorrichtung
- 29: Anschlussstutzen
- 30: Rückschlagklappe
- 31: Reinluft
- 32: Rohluft
- 33: Staub/Späne
- 34: Rad (an 100)
- 35: Griff
- 36: Rad (an 20)
- 37: Schalter
- 38: Verriegelungsgriff
- 39: Verriegelungshaken
- 40: Vorsprung
- 41: Notaus-Schalter
- 100: Entstaubungsvorrichtung
- 200: Entstaubungsvorrichtung

- A - A: Schnitt
- B: Ausschnitt
- C: Ausschnitt
- D: Ausschnitt
- E: Ausschnitt
- AM: Arbeitsmodus
- WM: Wartungsmodus
- LVS: Luftvolumenstrom
- LVS-AM: Luftvolumenstrom im Arbeitsmodus
- LVS-WM: Luftvolumenstrom im Wartungsmodus

## Patentansprüche

1. Entstaubungsvorrichtung (100) zum Abscheiden von Verunreinigungen aus einem Luftstrom, wie Späne und Stäube, umfassend:
- wenigstens eine Lufteinlassöffnung (10) und wenigstens eine Luftauslassöffnung (11),
- einen Expansionsraum (12) mit einer darin untergebrachten Filtereinheit (13),
- wenigstens einen Motor (14) zum Antrieb wenigstens eines Ventilators (15) zur Erzeugung eines Luftvolumenstroms, welcher von der wenigstens einen Lufteinlassöffnung (10) zu der wenigstens einen Luftauslassöffnung (11) geführt wird,
- wenigstens einen von der Entstaubungsvorrichtung (100) entfernbaren Auffangbehälter (20) zum Auffangen von Stäuben und/oder Spänen,
**dadurch gekennzeichnet, dass** eine Einstelleinrichtung (16) vorgesehen ist mittels derer ein in einem Arbeitsmodus (AM) wirkender Luftvolumenstrom (LVS-AM) auf einen in einem Wartungsmodus (WM) wirkenden geringeren Luftvolumenstrom (LVS-WM) reduzierbar ist.

2. Entstaubungsvorrichtung (100) nach Anspruch 1, **dadurch gekennzeichnet, dass** der im Wartungsmodus (WM) wirkenden Luftvolumenstrom (LVS-WM) um 30% bis 99% kleiner, vorzugsweise um 69% bis 89% kleiner ist als der im Arbeitsmodus (AM) wirkender Luftvolumenstrom (LVS-AM).

3. Entstaubungsvorrichtung (100) nach Anspruch 1 oder 2, **dadurch gekennzeichnet, dass** die Einstelleinrichtung (16) durch einen Schalter (17) und/oder durch einen Schalter (37) ausgebildet wird, mittels dessen die Entstaubungseinrichtung (100) aus einer den Arbeitsmodus (AM) ausbildenden ersten Schaltstellung in eine den Wartungsmodus (WM) ausbildende zweite Schaltstellung umschaltbar ist und umgekehrt.

4. Entstaubungsvorrichtung (100) nach einem der Ansprüche 1 bis 3, **dadurch gekennzeichnet, dass** die Entstaubungsvorrichtung (100) weiterhin ein zentrales Bedienpult (18) umfasst und der Schalter (17) und/oder der Schalter (37) am Bedienpult (18) angeordnet ist.

5. Entstaubungsvorrichtung (100) nach einem der Ansprüche 1 bis 4, **dadurch gekennzeichnet, dass** der Schalter (17) und/oder der Schalter (37) am Auffangbehälter (20) angeordnet ist.

6. Entstaubungsvorrichtung (100) nach einem der Ansprüche 1 bis 5, **dadurch gekennzeichnet, dass** ein Verzögerungs-Stellglied vorgesehen ist, welches nach Umschalten des im Arbeitsmodus (AM) wirkender Luftvolumenstrom (LVS-AM) auf den im Wartungsmodus (WM) wirkenden geringeren Luftvolumenstrom (LVS-WM) für eine vordefinierte Zeitspanne die Demontage des Auffangbehälters (20) von der Entstaubungsvorrichtung (100) blockiert, so dass die Demontage erst dann möglich ist, wenn der Luftvolumenstrom (LVS) seinen im Wartungsmodus (WM) vorgesehenen Sollwert erreicht hat.

7. Entstaubungsvorrichtung (100) nach einem der Ansprüche 1 bis 6, **dadurch gekennzeichnet, dass** die Entstaubungsvorrichtung (100) weiterhin eine Einrichtung zur Regulation des Luftvolumenstroms (LVS), vorzugsweise einen Frequenzumrichter (19), umfasst, mittels dessen die Größe des Luftvolumenstroms (LVS) regulierbar ist.

8. Entstaubungsvorrichtung (100) nach einem der Ansprüche 1 bis 7, **dadurch gekennzeichnet, dass** der im Arbeitsmodus (AM) wirkende Luftvolumenstrom (LVS-AM) und/oder der im Wartungsmodus (LVS-WM) wirkende Luftvolumenstrom einstellbar ist.

9. Entstaubungsvorrichtung (100) nach einem der Ansprüche 1 bis 8, **dadurch gekennzeichnet, dass**
- ein Sensor (21) zur Ermittlung eines Auffangbehälter-Füllstandes (22) und/oder ein Sensor (22) zur Ermittlung einer Auffangbehälter-Position (20) vorgesehen ist
- vom Sensor (21; 22) bei Erreichen eines vordefinierten Auffangbehälter-Füllstandes oder einer vordefinierten Auffangbehälter-Position ein Steuersignal an eine Maschinensteuerung (23) übermittelbar ist,
- mittels der Maschinensteuerung (23) und / oder der Einstelleinrichtung (16) des im Arbeitsmodus (AM) wirkender Luftvolumenstrom (LVS-AM) auf den im Wartungsmodus (WM) wirkenden geringeren Luftvolumenstrom (LVS-WM) reduzierbar ist.

10. Entstaubungsvorrichtung (100) nach einem der Ansprüche 1 bis 9, **dadurch gekennzeichnet, dass**
- der Auffangbehälter (20) in einer Aufnahmebehälter-Aufnahme (24) der Entstaubungseinrichtung (100) gelagert und durch eine Verriegelung (25) fixierbar ist,
- weiterhin ein Sensor (26) zur Ermittlung des Verriegelungszustandes der Verriegelung (25) vorgesehen ist und ein vom Sensor (26) ermittelter Verriegelungszustands-Kennwert an die Maschinensteuerung (23) und/oder die Einstelleinrichtung (16) übermittelbar ist,
so dass eine Erhöhung des im Wartungsmodus (WM) wirkenden geringeren Luftvolumenstrom (LVS-WM) auf den im Arbeitsmodus (AM) wirkender Luftvolumenstrom (LVS-AM) in Abhängigkeit vom Verriegelungszustand der Verriegelung (25) steuerbar ist.

11. Entstaubungsvorrichtung (100) nach einem der Ansprüche 1 bis 10, **dadurch gekennzeichnet, dass** eine Umschalteinrichtung vorgesehen ist, mittels derer:
- ein manueller Betrieb der Entstaubungsvorrichtung (100) vorwählbar ist, in dem die Umschaltung von Arbeitsmodus (AM) und Wartungsmodus (WM) manuell schaltbar ist,
- ein automatischer Betrieb der Entstaubungsvorrichtung (100) vorwählbar ist, in dem die Umschaltung von Arbeitsmodus (AM) und Wartungsmodus (WM) durch die Maschinensteuerung (23) bei Vorliegen vordefinierter Kriterien automatisch erfolgt.

12. Verfahren zum Betrieb einer Entstaubungsvorrichtung (100) nach einem der Ansprüche 1 bis 11, **dadurch gekennzeichnet, dass**
- im Arbeitsmodus (AM) ein Luftvolumenstrom (LVS-AM) erzeugt wird mittels dessen innerhalb der Entstaubungsvorrichtung (100) Verunreinigungen wie Späne und Stäube aus dem Luftstrom abgeschieden werden und
- im Wartungsmodus (WM) ein Luftvolumenstrom (LVS-WM) erzeugt wird, der ausreichend klein ist um eine widerstandsarme Demontage des Auffangbehälters (20) zu ermöglichen und andererseits ausreichend groß ist, um das Herabrieseln von Spänen und Stäuben aus dem Expansionsraum (12) in den durch Demontage des Auffangbehälters (20) ausgebildeten Freiraum zu vermeiden oder zu reduzieren.

13. Verfahren zum Betrieb einer Entstaubungsvorrichtung (100) nach Anspruch 12, **dadurch gekennzeichnet, dass** die Umschaltung zwischen Arbeitsmodus (AM) und Wartungsmodus (WM) von der Maschinensteuerung (23) oder der Einstelleinrichtung (16) automatisch dann erfolgt, wenn ein von einem Sensor (21; 22; 26) ermittelter Istwert einen vordefinierten Sollwert erreicht oder überschreitet.

## Claims

1. Dedusting device (100) for separating impurities from an air flow, such as chips and dusts, comprising:
- at least one air inlet opening (10) and at least one air outlet opening (11),
- an expansion chamber (12) with a filter unit (13) accommodated therein,
- at least one motor (14) for driving at least one fan (15) for generating a volumetric air flow which is guided from the at least one air inlet opening (10) to the at least one air outlet opening (11),
- at least one collecting container (20), which can be removed from the dedusting device (100), for collecting dust and/or chips,
**characterised in that** an adjusting device (16) is provided by means of which a volumetric air flow (LVS-AM) acting in a working mode (AM) can be reduced to a lower volumetric air flow (LVS-WM) acting in a maintenance mode (WM).

2. Dedusting device (100) according to claim 1, **characterised in that** the air volume flow (LVS-WM) acting in the maintenance mode (WM) is 30% to 99% smaller, preferably 69% to 89% smaller, than the air volume flow (LVS-AM) acting in the working mode (AM).

3. Dedusting device (100) according to claim 1 or 2, **characterised in that** the adjusting device (16) is formed by a switch (17) and/or by a switch (37), by means of which the dedusting device (100) can be switched from a first switching position forming the working mode (AM) into a second switching position forming the maintenance mode (WM) and vice versa.

4. Dedusting device (100) according to one of claims 1 to 3, **characterised in that** the dedusting device (100) further comprises a central control panel (18) and the switch (17) and/or the switch (37) is arranged on the control panel (18).

5. Dedusting device (100) according to any one of claims 1 to 4, **characterised in that** the switch (17) and/or the switch (37) is arranged on the collecting container (20).

6. Dedusting device (100) according to one of the claims 1 to 5, **characterised in that** a delay actuator is provided which, after switching the air volume flow (LVS-AM) acting in the working mode (AM) to the lower air volume flow (LVS-WM) acting in the maintenance mode (WM), blocks the disassembly of the collecting container (20) from the dedusting device (100) for a predefined period of time, so that disassembly is only possible when the air volume flow (LVS) has reached its setpoint value provided for in the maintenance mode (WM).

7. Dedusting device (100) according to any one of claims 1 to 6, **characterised in that** the dedusting device (100) further comprises a device for regulating the air volume flow (LVS), preferably a frequency converter (19), by means of which the magnitude of the air volume flow (LVS) can be regulated.

8. Dedusting device (100) according to one of the claims 1 to 7, **characterised in that** the air volume flow (LVS-AM) acting in the working mode (AM) and/or the air volume flow (LVS-WM) acting in the maintenance mode (LVS) is adjustable.

9. Dedusting device (100) according to one of the claims 1 to 8, **characterised in that**
- a sensor (21) is provided for determining a collecting container filling level (22) and/or a sensor (22) is provided for determining a collecting container position (20),
- a control signal can be transmitted from the sensor (21; 22) to a machine control (23) when a predefined collecting container filling level or a predefined collecting container position is reached,
- by means of the machine control (23) and/or the adjusting device (16), the air volume flow (LVS-AM) acting in the working mode (AM) can be reduced to the lower air volume flow (LVS-WM) acting in the maintenance mode (WM).

10. Dedusting device (100) according to one of the claims 1 to 9, **characterised in that**
- the collecting container (20) is mounted in a collecting container receptacle (24) of the dedusting device (100) and can be fixed by a locking device (25),
- furthermore a sensor (26) is provided for determining the locking state of the locking device (25) and a locking state characteristic value determined by the sensor (26) can be transmitted to the machine control (23) and/or the adjusting device (16),
so that an increase in the lower air volume flow (LVS-WM) acting in the maintenance mode (WM) to the air volume flow (LVS-AM) acting in the work mode (AM) can be controlled as a function of the locking state of the locking device (25).

11. Dedusting device (100) according to one of the claims 1 to 10, **characterised in that** a switchover device is provided by means of which:
- a manual operation of the dedusting device (100) can be preselected, in which the switchover from working mode (AM) and maintenance mode (WM) can be switched manually,
- automatic operation of the dedusting device (100) can be preselected, in which the switchover from working mode (AM) and maintenance mode (WM) is carried out automatically by the machine control (23) if predefined criteria are present.

12. Method of operating a dedusting device (100) according to one of claims 1 to 11, **characterised in that**
- in the working mode (AM) an air volume flow (LVS-AM) is generated by means of which impurities such as chips and dusts are separated from the air flow within the dedusting device (100) and
- in the maintenance mode (WM), an air volume flow (LVS-WM) is generated which is sufficiently small to enable low-resistance dismantling of the collecting container (20) and, on the other hand, is sufficiently large to prevent or reduce the trickling of chips and dust from the expansion space (12) into the free space formed by dismantling of the collecting container (20).

13. Method of operating a dedusting device (100) according to claim 12, **characterised in that** switching between working mode (AM) and maintenance mode (WM) is effected automatically by the machine control (23) or the adjusting device (16) when an actual value determined by a sensor (21; 22; 26) reaches or exceeds a predefined set value.

## Revendications

1. Arrangement de dépoussiérage (100) destiné à séparer des impuretés d'un courant d'air, telles que des copeaux et de la poussière, comprenant :
- au moins une ouverture d'entrée d'air (10) et au moins une ouverture de sortie d'air (11),
- une chambre d'expansion (12) comprenant une unité de filtrage (13) logée dans celle-ci,
- au moins un moteur (14) destiné à entraîner au moins un ventilateur (15) en vue de générer un débit volumique d'air, lequel est guidé de l'au moins une ouverture d'entrée d'air (10) à l'au moins une ouverture de sortie d'air (11),
- au moins un récipient collecteur (20) pouvant être retiré de l'arrangement de dépoussiérage (100) et destiné à collecter des poussières et/ou des copeaux,
**caractérisé en ce qu'**un dispositif de réglage (16) est présent, au moyen duquel un débit volumique d'air (LVS-AM) agissant dans un mode de travail (AM) peut être réduit à un débit volumique d'air (LVS-WM) plus faible agissant dans un mode de maintenance (WM).

2. Arrangement de dépoussiérage (100) selon la revendication 1, **caractérisé en ce que** le débit volumique d'air (LVS-WM) plus faible agissant dans le mode de maintenance (WM) est plus petit de 30 % à 99 %, de préférence plus petit de 69 % à 89 % que le débit volumique d'air (LVS-AM) agissant dans le mode de travail (AM).

3. Arrangement de dépoussiérage (100) selon la revendication 1 ou 2, **caractérisé en ce que** le dispositif de réglage (16) est formé par un commutateur (17) et/ou par un commutateur (37) au moyen duquel l'arrangement de dépoussiérage (100) peut être permuté depuis une première position de commutation, qui forme le mode de travail (AM), en une deuxième position de commutation, qui forme le mode de maintenance (WM), et inversement.

4. Arrangement de dépoussiérage (100) selon l'une des revendications 1 à 3, **caractérisé en ce que** l'arrangement de dépoussiérage (100) comporte en outre un pupitre de commande (18) central et le commutateur (17) et/ou par le commutateur (37) est disposé sur le pupitre de commande (18).

5. Arrangement de dépoussiérage (100) selon l'une des revendications 1 à 4, **caractérisé en ce que** le commutateur (17) et/ou par le commutateur (37) est disposé sur le récipient collecteur (20).

6. Arrangement de dépoussiérage (100) selon l'une des revendications 1 à 5, **caractérisé en ce qu'**un organe de réglage de retard est présent, lequel, après la permutation du débit volumique d'air (LVS-AM) agissant dans le mode de travail (AM) au débit volumique d'air (LVS-WM) plus faible agissant dans le mode de maintenance (WM), bloque pendant un intervalle de temps prédéfini le démontage du récipient collecteur (20) de l'arrangement de dépoussiérage (100), de sorte que le démontage n'est possible qu'après que le débit volumique d'air (LVS) a atteint sa valeur de consigne prévue dans le mode de maintenance (WM).

7. Arrangement de dépoussiérage (100) selon l'une des revendications 1 à 6, **caractérisé en ce que** l'arrangement de dépoussiérage (100) comporte en outre un dispositif servant à la régulation du débit volumique d'air (LVS), de préférence un variateur de fréquence (19), au moyen duquel la grandeur du débit volumique d'air (LVS) peut être régulée.

8. Arrangement de dépoussiérage (100) selon l'une des revendications 1 à 7, **caractérisé en ce que** le débit volumique d'air (LVS-AM) agissant dans le mode de travail (AM) et/ou le débit volumique d'air agissant dans le mode de maintenance (LVS-WM) est réglable.

9. Arrangement de dépoussiérage (100) selon l'une des revendications 1 à 8, **caractérisé en ce que**
- un capteur (21) destiné à déterminer un état de remplissage de récipient collecteur (22) et/ou un capteur (22) destiné à déterminer une position de récipient collecteur (20) est présent,
- un signal de commande peut être communiqué à une commande de machine (23) par le capteur (21 ; 22) lorsqu'un état de remplissage de récipient collecteur prédéfini ou une position de récipient collecteur prédéfinie est atteint(e),
- le débit volumique d'air (LVS-AM) agissant dans le mode de travail (AM) peut être réduit au débit volumique d'air (LVS-WM) plus faible agissant dans le mode de maintenance (WM) au moyen de la commande de machine (23) et/ou du dispositif de réglage (16).

10. Arrangement de dépoussiérage (100) selon l'une des revendications 1 à 9, **caractérisé en ce que**
- le récipient collecteur (20) est monté dans un logement de récipient collecteur (24) de l'arrangement de dépoussiérage (100) et peut être bloqué par un élément de verrouillage (25),
- un capteur (26) destiné à déterminer l'état de verrouillage de l'élément de verrouillage (25) est en outre présent et une valeur caractéristique d'état de verrouillage déterminée par le capteur (26) peut être communiquée à la commande de machine (23) et/ou au dispositif de réglage (16),
de sorte qu'une augmentation du débit volumique d'air (LVS-WM) plus faible agissant dans le mode de maintenance (WM) au débit volumique d'air (LVS-AM) agissant dans le mode de travail (AM) peut être commandée en fonction de l'état de verrouillage de l'élément de verrouillage (25).

11. Arrangement de dépoussiérage (100) selon l'une des revendications 1 à 10, **caractérisé en ce qu'**un dispositif de permutation est présent, au moyen duquel :
- un fonctionnement manuel de l'arrangement de dépoussiérage (100) peut être présélectionné, dans lequel la permutation du mode de travail (AM) et du mode de maintenance (WM) peut être commutée manuellement,
- un fonctionnement automatique de l'arrangement de dépoussiérage (100) peut être présélectionné, dans lequel la permutation du mode de travail (AM) et du mode de maintenance (WM) est effectuée automatiquement par la commande de machine (23) en présence de critères prédéfinis.

12. Procédé pour faire fonctionner un arrangement de dépoussiérage (100) selon l'une des revendications 1 à 11, **caractérisé en ce que**
- dans le mode de travail (AM), un débit volumique d'air (LVS-AM) est généré, au moyen duquel des impuretés telles que des copeaux et de la poussière sont séparées du courant d'air à l'intérieur de l'arrangement de dépoussiérage (100) et
- dans le mode de maintenance (WM), un débit volumique d'air (LVS-WM) est généré, lequel est suffisamment petit pour rendre possible un démontage à faible résistance du récipient collecteur (20) et, d'un autre côté, est suffisamment grand pour empêcher ou réduire l'écoulement vers le bas de copeaux et de poussières depuis la chambre d'expansion (12) dans l'espace libre formé par le démontage du récipient collecteur (20).

13. Procédé pour faire fonctionner un arrangement de dépoussiérage (100) selon la revendication 12, **caractérisé en ce que** la permutation entre le mode de travail (AM) et le mode de maintenance (WM) est effectuée automatiquement par la commande de machine (23) ou le dispositif de réglage (16) lorsque la valeur réelle déterminée par un capteur (21 ; 22 ; 26) atteint ou dépasse une valeur de consigne prédéfinie.
